# EUROPÄISCHE PATENTSCHRIFT

(11) **EP 2 282 077 B1**
(45) Veröffentlichungstag und Bekanntmachung des Hinweises auf die Patenterteilung: **17.10.2012**
(21) Anmeldenummer: 09010046.2
(22) Anmeldetag: 04.08.2009
(51) Int. Cl.: F16F 9/52, F16F 15/16

(54) **Dämpfungsvorrichtung und drehelastische Kupplung damit**
Dampening device and accompanying rotating elastic coupling
Dispositif d'amortissement et embrayage élastique rotatif en étant équipé

(43) Veröffentlichungstag der Anmeldung: 09.02.2011
(73) Patentinhaber: Carl Freudenberg KG, 69469 Weinheim (DE)
(72) Erfinder: Eckel, Hans-Gerd, 69514 Laudenbach (DE)

(56) Entgegenhaltungen:
- DE-A1- 3 227 903
- DE-A1- 10 057 822
- DE-A1- 10 307 362
- FR-A1- 2 339 104
- US-A- 5 191 811

## Beschreibung

### Technisches Gebiet

Die Erfindung betrifft eine Dämpfungsvorrichtung, umfassend einen von einer Dämpfungsflüssigkeit durchströmbaren Dämpfungsspalt, der zwei miteinander in Verbindung stehende und mit der Dämpfungsflüssigkeit befüllbare Fluidkammern miteinander verbindet, wobei der Durchströmquerschnitt des Dämpfungsspalts durch einen Ventilkörper veränderbar ist und wobei der Ventilkörper von einem thermisch betätigbaren Stellelement bewegbar ist. Außerdem betrifft die Erfindung eine drehelastische Kupplung mit einer solchen Dämpfungsvorrichtung.

### Stand der Technik

Eine Dämpfungsvorrichtung in Form eines regelbaren Stoßdämpfers für Kraftfahrzeuge ist aus der DE 32 27 903 A1 bekannt. Der vorbekannte regelbare Stoßdämpfer ist mit einem in einer axialen Bohrung einer Kolbenstange beweglich angeordneten, in axialer Richtung federbelasteten Steuerschieber versehen, der in Ruhestellung oder Arbeitsstellung eine zusätzliche Durchgangsöffnung, einen sogenannten Bypass, zwischen zwei Kammerhälften eines Zylinderraums schließt oder öffnet. Die Feder zur Bewegung des Steuerschiebers ist eine Bimetallfeder zur axialen temperaturabhängigen Verstellung des Steuerschiebers innerhalb des Strömungswegs des Bypasses. Durch den vorbekannten Stoßdämpfer soll die Aufgabe gelöst werden, unterschiedliche Temperaturen und unterschiedliche Viskositäten der im Zylinderraum befindlichen Dämpfungsflüssigkeit auszuregeln.

Verändert sich die Temperatur der Dämpfungsflüssigkeit im Zylinderraum, so verändert sich die axiale Länge der Bimetallfeder, wodurch beispielsweise der Steuerschieber je nach Anordnung der Bimetallfeder den Strömungsweg des Bypasses mehr oder weniger verschließt.

Eine weitere Dämpfungsvorrichtung und eine drehelastische Kupplung damit sind aus der Praxis bekannt und werden beispielsweise bei Fahrzeugen mit einem Verbrennungsmotor dazu verwendet, die ungleichförmigen Drehbewegungen der Kurbelwelle des Verbrennungsmotors und die dadurch verursachte Vibration vom Triebstrang zu entkoppeln. Die unerwünschten Vibrationen, insbesondere die hohen Amplituden der Drehschwingungen und die dadurch bewirkte höhere mechanische Belastung der angeschlossenen Bauteile sowie die oftmals als störend empfundene Geräuschentwicklung nehmen mit höherer Leistung und insbesondere mit zunehmendem Drehmoment des Verbrennungsmotors deutlich zu.

Zu beobachten ist, dass in der Entwicklung befindliche Motoren immer höhere mittlere Drehmomente bereitstellen und dass künftig mit deutlich verstärkter dynamische Anregung zu rechnen ist.

Die bekannte Dämpfungsvorrichtung basiert darauf, dass Dämpfungsflüssigkeit von einer Fluidkammer durch einen Dämpfungsspalt oder eine Drossel in eine benachbarte Fluidkammer und wieder zurück gefördert wird. Bei zum Beispiel mit der Antriebswelle oder mit der Abtriebswelle starr verbundenen Verdrängungskörpem, die in eine Dämpfungsflüssigkeit eintauchen oder hineinragen, wird bei einer Verdrehung der Antriebswelle relativ zu der Abtriebswelle aufgrund der Relativbewegung der Verdrängungskörper zueinander eine Verdrängung der Dämpfungsflüssigkeit durch den Dämpfungsspalt der Dämpfungsvorrichtung erzwungen, wodurch eine Dämpfung der Relativbewegung eintritt.

Eine kleine Dämpfung steht für gute Isolation von kleinamplitudigen Schwingungen, während eine hohe Dämpfung für größere Amplituden beim Resonanzdurchlauf sowie bei Motorstart und Motorstopp vorteilhaft ist. Die nach dem Stand der Technik übliche, aus Komfortgründen klein gewählte Drehdämpfung führt deshalb oft zu unerwünscht hohen Amplituden oder sogar zu sogenannten Resonanzhängem, das heißt, der Resonanzdurchlauf gelingt nicht.

Außerdem hat sich gezeigt, dass die aus der Praxis bekannten fluidverdrängenden Dämpfungsvorrichtungen üblicherweise mit einer Dämpfungsflüssigkeit betrieben werden, deren Viskosität stark temperaturabhängig ist. In Abhängigkeit von der sich temperaturbedingt ändernden Viskosität ändert sich in entsprechender Weise auch die Dämpfungswirkung der fluidverdrängenden Dämpfungsvorrichtung, was hinsichtlich gleichbleibend guter Gebrauchseigenschaften über alle auftretenden Temperaturbereiche nachteilig ist. Die Dämpfungswirkung ist stark abhängig von der jeweils aktuellen Betriebstemperatur der drehelastischen Kupplung und der darin befindlichen Dämpfungsflüssigkeit in der Dämpfungsvorrichtung.

Der Erfindung liegt die Aufgabe zugrunde, eine weitere Dämpfungsvorrichtung zu zeigen und eine drehelastische Kupplung damit derart weiter zu entwickeln, dass die zuvor genannten Nachteile vermieden werden, insbesondere dass eine sich temperaturbedingt ändernde Viskosität der Dämpfungsflüssigkeit höchstens noch einen vernachlässigbar geringen Einfluss auf die Dämpfungswirkung der Dämpfungsvorrichtung hat und dass die Dämpfungsvorrichtung und die Kupplung damit einfach und kostengünstig herstellbar sind.

Diese Aufgabe wird erfindungsgemäß jeweils durch eine Dämpfungsvorrichtung gemäß Anspruch 1 und Anspruch 5 und durch eine drehelastische Kupplung damit nach Anspruch 10 gelöst. Auf vorteilhafte Ausgestaltungen der Dämpfungsvorrichtung nehmen die auf die Ansprüche 1 und 5 rückbezogenen Ansprüche Bezug.

Zur Lösung der Aufgabe ist eine Dämpfungsvorrichtung vorgesehen, umfassend einen von einer Dämpfungsflüssigkeit durchströmbaren Dämpfungsspalt, der zwei miteinander in Verbindung stehende und mit der Dämpfungsflüssigkeit befüllbare Fluidkammern miteinander verbindet, wobei der Durchströmquerschnitt des Dämpfungsspalts durch einen Ventilkörper veränderbar ist und wobei der Ventilkörper von einem thermisch betätigbaren Stellelement bewegbar ist. Das Stellelement umfasst nach einer ersten Ausgestaltung einen beweglichen Kolben und ein Übertragungselement, wobei der Kolben von einem sein Volumen temperaturabhängig ändernden Medium oder Dehnkörper beaufschlagbar ist, wobei das Übertragungselement durch zumindest eine Bahnkurve gebildet ist, die in Bewegungsrichtung des Kolbens durch den Kolben hin-und herbewegbar ist, wobei die erste Bewegungsrichtung von Kolben und Übertragungselement und die zweite Bewegungsrichtung vom Ventilkörper winklig zueinander angeordnet sind.

Hierbei ist von Vorteil, dass eine Kompensation einer temperaturabhängigen Viskositätsänderung der Dämpfungsflüssigkeit präzise erfolgt und auf die Eigenschaften der Dämpfungsflüssigkeit und auf die Erfordernisse der gesamten Dämpfungsvorrichtung anpassbar ist. Neben Silikonölen, die bei sich ändernden Temperaturen ihre Viskosität nur vergleichsweise gering ändern, können als Dämpfungsflüssigkeit bei der erfindungsgemäßen Vorrichtung zum Beispiel auch Mineralöle zur Anwendung gelangen, die eine vergleichsweise stärkere Viskositätsänderung mit sich ändernden Temperaturen aufweisen. Bei der erfindungsgemäßen Dämpfungsvorrichtung erfolgt die Steuerung der Dämpfung in Abhängigkeit von der jeweiligen Temperatur derart, dass sich nahezu eine konstante temperaturunabhängige Dämpfung ergibt. Erreicht wird das durch eine Kombination des linear mit der Temperatur sich in seiner Länge ändernden thermischen Stellelements mit einer variablen mechanischen Übersetzung, die den Durchströmquerschnitt des Dämpfungsspalts bedarfsgerecht an die jeweils aktuelle Viskosität der Dämpfungsflüssigkeit anpasst.

Das Dämpfungsvermögen der Dämpfungsvorrichtung ist maßgeblich von der verwendeten Dämpfungsflüssigkeit und dem Drosselspalt der Drosselvorrichtung abhängig. Dabei sollen einerseits die Schwingungen des Antriebsstrangs eines Kraftfahrzeugs mit einer Verbrennungskraftmaschine während des Betriebs gut isoliert werden und andererseits bei einem Startvorgang oder beim Abstellen der Verbrennungskraftmaschine auftretende resonante Schwingungen gedämpft werden. Der Durchströmquerschnitt des Dämpfungsspalts, der durch den Ventilkörper veränderbar ist, bewirkt demnach gute Gebrauchseigenschaften für die zuvor beschriebenen Betriebszustände, und zwar auch dann, wenn die Dämpfungsvorrichtung und / oder die Kupplung damit während ihres Gebrauchs einer unterschiedlich hohen Temperaturbeaufschlagung ausgesetzt sind.

Die aus den sich ändernden Temperaturen resultierenden Änderungen der Viskosität der Dämpfungsflüssigkeit werden durch die erfindungsgemäße Dämpfungsvorrichtung selbsttätig kompensiert, so dass der Strömungswiderstand und damit die Dämpfungswirkung der Dämpfungsvorrichtung an den normalen Betrieb angepasst und eine optimale Bedämpfung der während des normalen Betriebs auftretenden Schwingungen ermöglicht wird.

Die Betätigung des Übertragungselements durch den Kolben erfolgt dabei temperaturabhängig und selbsttätig. Je höher die Temperatur, desto stärker dehnt sich das im Stellelement befindliche Medium oder der Dehnkörper aus, wirkt dadurch auf den Kolben und der Kolben auf das Übertragungselement. Das Übertragungselement betätigt den Ventilkörper mittels der Bahnkurven derart, dass der Durchströmquerschnitt des Dämpfungsspalts verringert wird. Sinkt demgegenüber die Temperatur, führt das zu einer Volumenverkleinerung von Medium oder Dehnkörper, der Kolben und das Übertragungselement bewegen sich deshalb wieder zurück und der Ventilkörper bewegt sich wieder in seine ursprüngliche Position; der Durchströmquerschnitt des Dämpfungsspalts ist dann wieder größer.

Der Kolben sowie das Übertragungselement und / oder der Ventilkörper sind bevorzugt entgegen der Rückstellkraft einer Federeinrichtung verlagerbar. Bei einer Erhöhung der Temperatur dehnt sich das Medium oder der Dehnkörper gegen die Federkraft einer Federeinrichtung aus. Ist die Temperatur demgegenüber reduziert, und das Medium und der Dehnkörper schrumpfen, bewegen sich das Stellelement und der Ventilkörper wieder in Richtung der Position, in der der Durchströmquerschnitt des Dämpfungsspalts am größten ist.

Besonders gut an die jeweiligen Gegebenheiten des Anwendungsfalls lässt sich die Dämpfungsvorrichtung anpassen, wenn die Bahnkurve derart gestaltet ist, dass die temperaturabhängig sich ändernde Viskosität der Dämpfungsflüssigkeit kompensiert wird. Die Bahnkurve erstreckt sich im Wesentlichen in erster Bewegungsrichtung, wobei die Bahnkurve bevorzugt degressiv gekrümmt ausgebildet ist, derart, dass bei gleicher Temperaturänderung die Änderung des Durchströmquerschnitts des Dämpfungsspalts bei tiefen Temperaturen größer als bei hohen Temperaturen ist.

Der Ventilkörper kann Führungsstifte aufweisen, die von der Bahnkurve stets anliegend berührt sind. Eine Veränderung des Durchströmquerschnitts des Dämpfungsspalts ist damit durch reibungsarmes Abrollen der Führungsstifte auf der Bahnkurve möglich.

Nach einer zweiten Ausgestaltung ist es vorgesehen, dass das Stellelement einen bogenförmig beweglichen und innerhalb einer entsprechenden torusförmigen Ausnehmung angeordneten Kolben und ein Übertragungselement umfasst, wobei der Kolben von einem sein Volumen temperaturabhängig ändernden Medium oder Dehnkörper im Stellelement beaufschlagbar ist, wobei das Übertragungselement eine Führungsschräge aufweist und wobei die erste Bewegungsrichtung von Kolben und Übertragungselement und die zweite Bewegungsrichtung vom Ventilkörper winklig zueinander angeordnet sind.

Die Führungsschräge kann auch als Bahnkurve ausgebildet sein.

Eine solche Ausgestaltung der Dämpfungsvorrichtung ist bevorzugt in drehelastischen Kupplungen gegeben.

Die beiden Bewegungsrichtungen sind bevorzugt im Wesentlichen senkrecht zueinander angeordnet. Dadurch wird eine Umlenkung einer Umfangsbewegung in eine Radialbewegung erzielt.

Das Verhältnis aus Verstellweg des Übertragungselementes in erster Bewegungsrichtung zum Hub des Ventilkörpers in zweiter Bewegungsrichtung bei einer Temperaturdifferenz Δt von 120°C beträgt bevorzugt 1,5 bis 6. Neben den temperaturabhängigen Eigenschafteten der Dämpfungsflüssigkeit bzw. der gesamten Dämpfungseinrichtung wird die Bahnkurve durch den Hub des thermischen Dehnelements und den erforderlichen Verstellweg des Ventilkörpers bestimmt.

Bei einer Temperaturänderung von z.B. 120°C kann der Hub des thermischen Mediums oder Dehnkörpers zum Beispiel 20 mm und der Verstellweg des Ventilkörpers zum Beispiel 5 mm betragen.

Für die meisten Anwendungsfälle, insbesondere bei Verwendung der Dämpfungsvorrichtung in einer drehelastischen Kupplung, sind vorgenannte Werte für Hub und Verstellweg hinsichtlich der Einstellbarkeit des Durchströmquerschnitts und damit der Kompensation der sich temperaturbedingt ändernden Viskosität der Dämpfungsflüssigkeit günstig und ausreichend.

Im Stand der Technik hat sich gezeigt, dass die hinsichtlich vieler Anforderungen für eine Verwendung als Dämpfungsflüssigkeit geeigneten Polyglykolöle eine stark temperaturabhängige Viskosität aufweisen und sich das Dämpfungsvermögen der Dämpfungsvonichtung bei Verwendung solcher Öle mit zunehmender oder abnehmender Temperatur unerwünscht stark verändert.

Um Dämpfungsvorrichtungen mit gleichbleibend guten Gebrauchseigenschaften in einem größeren Temperaturbereich einsetzen zu können, ist der veränderbare Durchströmquerschnitt des Dämpfungsspalts vorgesehen. Die Formgebung der Bahnkurve und damit der Verlauf des Hubs des thermischen Dehnelements und des Verstellwegs des Ventilkörpers abhängig von der Temperatur sind derart vorzusehen, dass der durch den Dämpfungsspalt bewirkte Strömungswiderstand für die Dämpfungsflüssigkeit eine temperaturbedingte sich ändernde Viskosität der Dämpfungsflüssigkeit kompensiert. In dem Maß, wie sich das Dämpfungsvermögen des Dämpfungsvorrichtung aufgrund der temperaturbedingten Viskositätsänderung der Dämpfungsflüssigkeit ändern würde, wird eine diese Änderung weitgehend kompensierende Veränderung des Durchströmquerschnitts des Dämpfungsspalts durch die ebenfalls temperaturbedingte Veränderung der Ausdehnung des Stellelements herbeigeführt.

Durch eine geeignete Anpassung der Gestalt und der Abmessungen des Dehnkörpers und dessen temperaturbedingter Ausdehnung an die verwendete Dämpfungsflüssigkeit und insbesondere deren temperaturbedingte Viskositätsänderung, kann dabei mit einfachen Mitteln eine über einen großen Temperaturbereich näherungsweise gleichbleibende Dämpfungswirkung der Dämpfungsvorrichtung gewährleistet werden.

Der zuvor beschriebene Hub und der Verstellweg sind für die meisten Anwendungsfälle im Bereich drehelastische Kupplung, insbesondere in einer Verbrennungskraftmaschine, besonders geeignet und ausreichend. Der thermische Dehnkörper kann als polymeres Formteil oder auch als fluidgefüllter Raum dargestellt werden, der in Wirkrichtung gleitend oder elastisch abgedichtet ist. Die elastische Abdichtung kann mittels eines Polymerschlauchs, Rollbalgs oder eines Wellbalgs ausgeführt sein.

Im Falle eines mit steigender Temperatur sich dehnenden flüssigen Mediums kann damit der Kolben innerhalb des Stellelements gegenüber dem Übertragungselement durch ein Dichtelement abgedichtet werden. Ein solches Dichtelement kann mittels bekannter gleitender Dichtungen, die bedarfsweise in einer funktionstechnischen Reihenschaltung angeordnet sind, oder auch mit elastisch verformbaren Elementen realisiert werden.

Die Dämpfungsvorrichtung ist derart ausgelegt, dass hinsichtlich konstanter Gebrauchseigenschaften bei unterschiedlichen Temperaturen die temperaturbedingte Ausdehnung des Mediums oder des Dehnkörpers im Stellelement an die temperaturbedingte Änderung der Viskosität der Dämpfungsflüssigkeit angepasst ist.

Die Erfindung betrifft außer der zuvor beschriebenen Dämpfungsvorrichtung auch eine drehelastische Kupplung, bei der eine solche Dämpfungsvorrichtung zur Anwendung gelangt. Eine solche drehelastische Kupplung kann, wie eingangs beschrieben, zur Dämpfung von Drehungleichförmigkeiten von Verbrennungskraftmaschinen und dadurch zum Schutz der an die Verbrennungskraftmaschine angeschlossenen Aggregate zur Anwendung gelangen.

### Kurzbeschreibung der Zeichnung

Zwei Ausführungsbeispiele werden nachfolgend anhand der Fig. 1 bis 6 gezeigt und näher beschrieben. Diese zeigen jeweils in schematischer Darstellung:
- Fig. 1: ein erstes Ausführungsbeispiel einer Dämpfungsvorrichtung, bei der der Durchströmquerschnitt des Dämpfungsspalts klein ist,
- Fig. 2: das Ausführungsbeispiel aus Fig. 1, bei dem der Durchströmquerschnitt des Dämpfungsspalts groß ist,
- Fig. 3: ein Beispiel eines Dichtelements, mit dem der Kolben innerhalb des Stellelements gegenüber dem Übertragungselement abgedichtet ist,
- Fig. 4 bis 6: ein zweites Ausführungsbeispiel, das einen Drehdämpfer mit elastischer Abdichtung der thermischen Dehnelemente zeigt.

### Ausführung der Erfindung

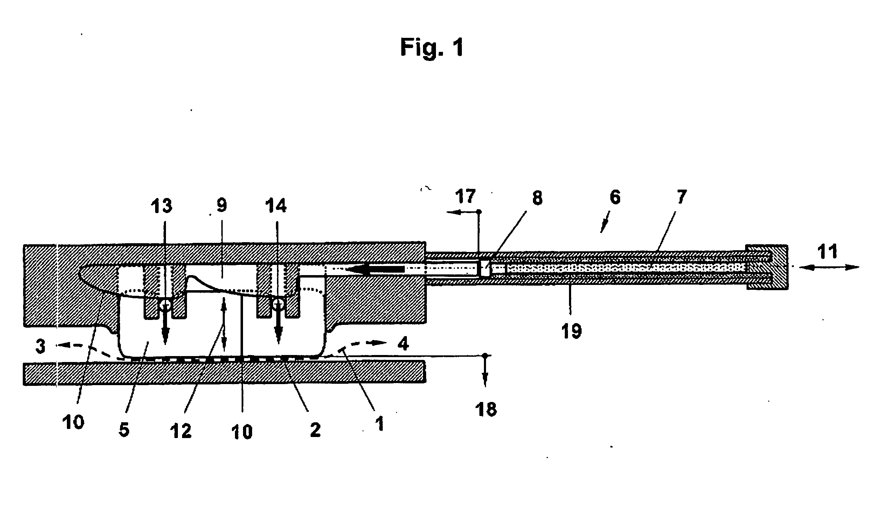

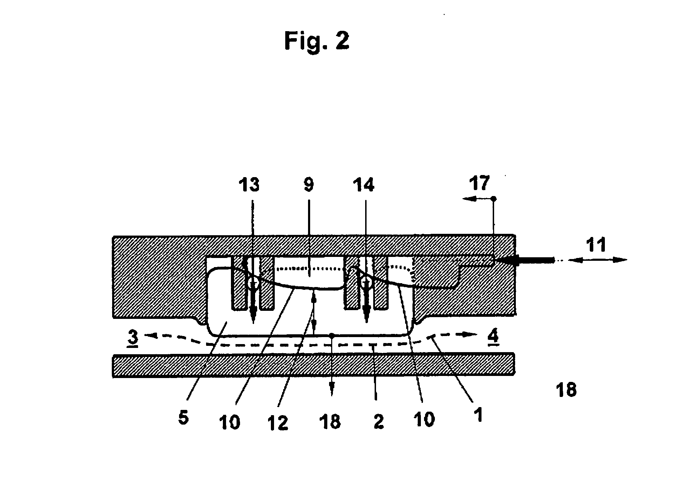

In den Fig. 1 und 2 ist eine Dämpfungsvorrichtung gezeigt, mit einem von der Dämpfungsflüssigkeit 1 durchströmbaren Dämpfungsspalt 2, der die beiden mit der Dämpfungsflüssigkeit 1 gefüllten Fluidkammem 3, 4 miteinander verbindet. Als Dämpfungsflüssigkeit 1 können auch kostengünstige Mineralöle zur Anwendung gelangen, die bei Temperaturänderungen eine vergleichsweise starke Viskositätsänderung aufweisen. Der Durchströmquerschnitt des Dämpfungsspalts 2 ist durch den Ventilkörper 5 veränderbar. Die Betätigung des Ventilkörpers 5 erfolgt durch ein thermisch betätigbares Stellelement 6. Abhängig von Temperaturänderungen, denen das Stellelement 6 ausgesetzt ist, bewegt sich der innerhalb des Stellelements 6 angeordnete Kolben 8, der unmittelbar mit dem Übertragungselement 9 verbunden ist. Im Stellelement 6 ist ein Dehnkörper 7 angeordnet, der auf den Kolben 8 wirkt, Das Übertragungselement 9 hat mindestens eine Bahnkurve 10 und ist zusammen mit dem Kolben 8 in einer ersten Bewegungsrichtung 11 hin- und herbewegbar. Der Verstellweg 17 des Übertragungselements 9 wird bei eine erste Bewegungsrichtung 11 um 90° umgelenkt zum Hub 18 in einer zweiten Bewegungsrichtung 12 des Ventilkörpers 5, wobei bei einer Temperaturänderung Δt von 120°C der Verstellweg 17 des thermischen Dehnkörpers 7 20 mm und der Hub 18 des Ventilkörpers 5 mm beträgt.

Der Ventilkörper 5 weist in diesem Ausführungsbeispiel zwei Führungsstifte 13, 14 auf, die die Bahnkurven 10 des Übertragungselements 9 anliegend berühren. Die Bahnkurven 10 sind degressiv gekrümmt ausgebildet, so dass der Dämpfungsspalt 2 von seinem größten Durchströmquerschnitt bei Betätigung des Stellelements 6 und des Übertragungselements 9 zunächst rasch und später nur noch langsam verkleinert wird. Speziell kleine Durchströmquerschnitte sind dadurch besonders präzise einstellbar.

Entscheidend ist, dass die Dämpfungsvorrichtung eine Dämpfungswirkung aufweist, die Abhängigkeit von den jeweils aktuell herrschenden Temperaturen derart steuerbar ist, dass sich eine nahezu temperaturunabhängige Dämpfung ergibt. Das Stellelement 6 ändert seine Länge linear mit sich verändernder Temperatur, wobei die Bahnkurven 10 des Übertragungselements 9 eine variable mechanische Übersetzung bildet, die den Durchströmquerschnitt durch den Dämpfungsspalt 2 bedarfsgerecht verändert. Hinsichtlich konstanter Gebrauchseigenschaften bei unterschiedlichen Temperaturen, ist die temperaturbedingte Ausdehnung des Mediums oder des Dehnkörpers 7 im Stellelement 6 an die temperaturbedingte Viskositätsänderung der Dämpfungsflüssigkeit 1 angepaßt. Dämpfungsflüssigkeiten 1, die ihre Viskosität abhängig von Temperaturänderungen vergleichsweise stark ändern, wie zum Beispiel einfach verfügbare und kostengünstige Mineralöle, können durch die zuvor beschriebene Kompensation in der beanspruchten Dämpfungsvorrichtung zur Anwendung gelangen. Vergleichsweise teure Silikonöle, die ihre Viskosität mit sich ändernden Temperaturen weniger stark verändern, sind nicht mehr erforderlich.

In Fig. 1 ist der Dämpfungsspalt 2, der die beiden Fluidkammern 3, 4 miteinander verbindet, klein; die Temperaturen, denen die Dämpfungsvorrichtung ausgesetzt ist, sind demgegenüber hoch.

In Fig. 2 ist die Dämpfungsvorrichtung aus Fig. 1 gezeigt. Die Temperatur, die auf das Stellelement 6 wirkt, hat sich, bezogen den Betriebszustand aus Fig. 1, um 100°C verringert; das sein Volumen temperaturabhängig verringernde Medium/der sein Volumen temperaturabhängig verringernde Dehnkörper 7 innerhalb des Stellelements 6 hat sich daraufhin zusammengezogen, und das Übertragungselement 9 ist ebenfalls derart zurückbewegt, dass der Dämpfungsspalt 2 vergrößert ist. Die Gebrauchseigenschaften in beiden Betriebszuständen, die in den Fig. 1 und 2 dargestellt sind, sind gleich.

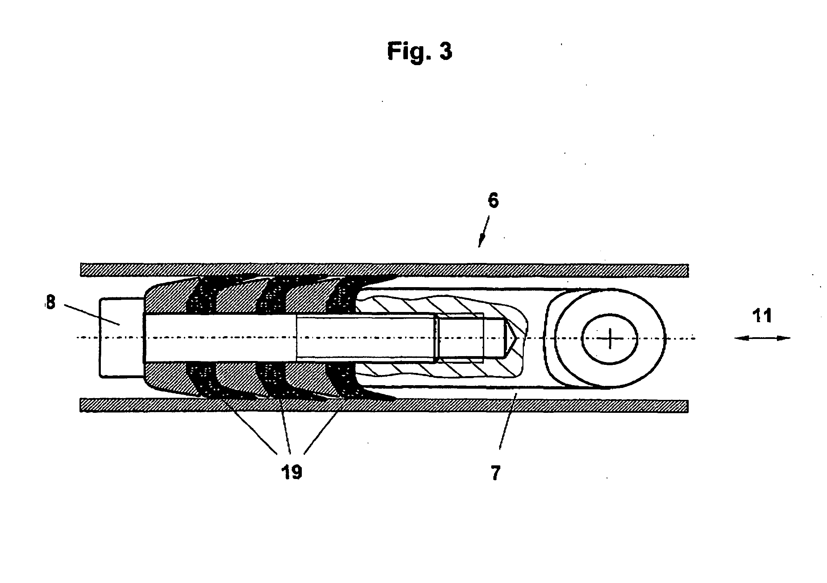

In Fig. 3 ist ein Ausführungsbeispiel eines Dichtelements 19 gezeigt, wobei das Dichtelement 19 den Kolben 8 innerhalb des Stellelements 6 gegenüber dem Übertragungselement 9 und dadurch auch gegenüber der Umgebung abdichtet. Das Dichtelement 19 ist im hier gezeigten Ausführungsbeispiel durch eine Dichtmanschette gebildet; anstelle der Dichtmanschette können auch übliche Kolbendichtungen zur Anwendung gelangen oder O-Ringe, durch die ebenfalls eine Abdichtung erfolgen kann.

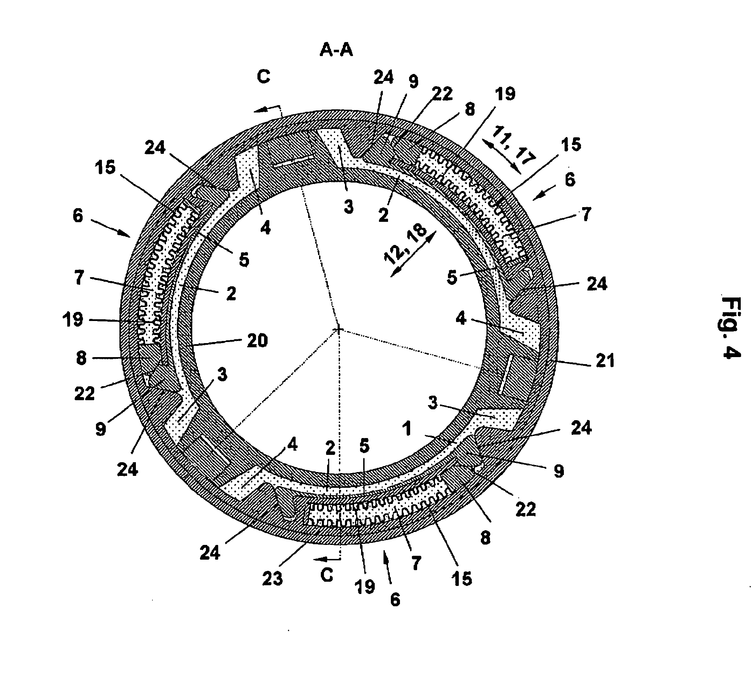

In den Fig. 4 bis 6 ist ein Ausführungsbeispiel einer drehelastische Kupplung gezeigt, mit einer Dämpfungsvorrichtung, wie zuvor beschrieben.

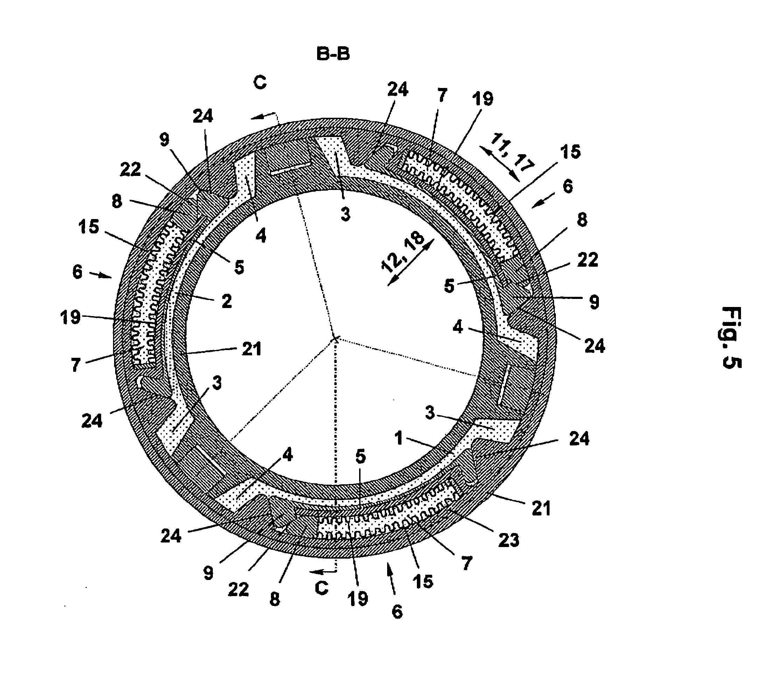

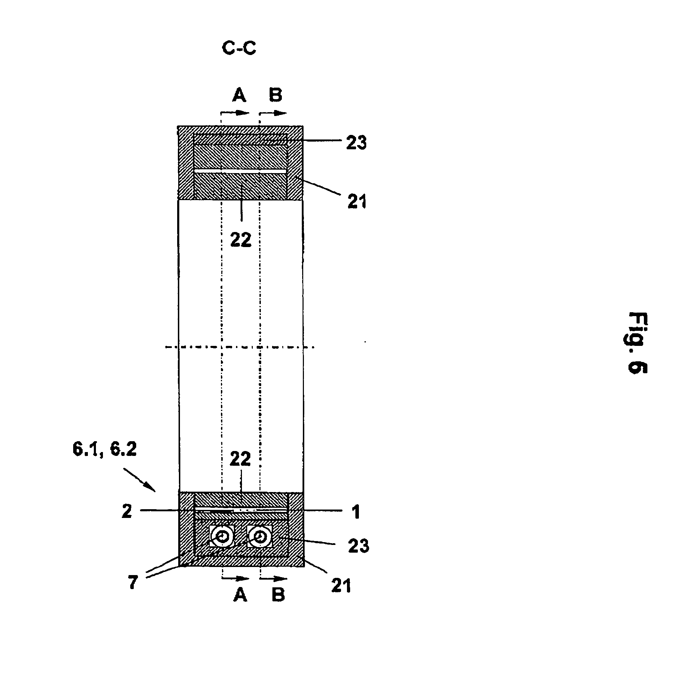

In Fig. 4 ist der Schnitt A-A, in Fig. 5 der Schnitt B-B, jeweils aus Fig. 6 gezeigt. Die beiden Fluidkammern 3.4 sind jeweils mit Dämpfungsflüssigkeit 1 gefüllt und durch den Dämpfungsspalt 2 miteinander verbunden. Bei Relatiwerdrehung der Nabe 20 zum Gehäuse 21 wird Dämpfungsflüssigkeit 1 aus der ersten/zweiten Fluidkammer 3/4 durch den Dämpfungsspalt 2 in die zweite/erste Fluidkammer 4/3 umverlagert. Der Durchströmquerschnitt des Dämpfungsspalts 2 ist durch einen Ventilkörper 5 veränderbar, wobei der Ventilkörper 5 von dem thermisch betätigbaren Stellelement 6 bewegbar ist. Der Kolben 8 bewegt sich bogenförmig innerhalb der torusförmigen Ausnehmung 15 und berührt eine Führungsschräge 22 des Übertragungselements 9 anliegend. Das die torusförmigen Ausnehmung 15 umgebenden Teil 23 ist drehfest mit dem Gehäuse 21 verbunden.
Das Übertragungselement 9 ist mit dem bogenförmigen Ventilkörper 5, die sich radial innerhalb und entlang der torusförmigen Ausnehmung 15 erstreckt, verbunden. Bei Betätigung des Stellelements 6 durch eine Temperaturbeaufschlagung und Erhöhung der Temperatur dehnt sich das innerhalb des Stellelements 6 angeordnete Medium/der innerhalb der torusförmigen Ausnehmung 15 angeordnete Dehnkörper 7 aus und drückt den Kolben 8 gegen das Übertragungselement 9, das den Ventilkörper 5 radial nach innen bewegt, so dass der Durchströmquerschnitt des Dämpfungsspalts 2 verkleinert wird. Hierbei wird der Ventilkörper 5 über die Führungsflächen 24 in Umfangsrichtung abgestützt bzw. geführt.

Wie aus Fig. 6 ersichtlich, sind axial zueinander benachbart erste und zweite Stellelemente 6.1, 6.2 angeordnet, um, in Umfangsrichtung betrachtet, eine gleichmäßige Veränderung des Durchströmquerschnitts des Dämpfungsspalts 2 zu erreichen.

## Patentansprüche

1. Dämpfungsvorrichtung, umfassend einen von einer Dämpfungsflüssigkeit (1) durchströmbaren Dämpfungsspalt (2), der zwei miteinander in Verbindung stehende und mit der Dämpfungsflüssigkeit (1) befüllbare Fluidkammern (3, 4) miteinander verbindet, wobei der Durchströmquerschnitt des Dämpfungsspalts (2) durch einen Ventilkörper (5) veränderbar ist und wobei der Ventilkörper (5) von einem thermisch betätigbaren Stellelement (6) bewegbar ist, **dadurch gekennzeichnet, dass** das Stellelement (6) einen beweglichen Kolben (8) und ein Übertragungselement (9) umfasst, wobei der Kolben (8) von einem sein Volumen temperaturabhängig ändernden Medium oder Dehnkörper (7) beaufschlagbar ist, wobei das Übertragungselement (9) durch zumindest eine Bahnkurve (10) gebildet ist, die in Bewegungsrichtung (11) des Kolbens (8) durch den Kolben (8) hin-und herbewegbar ist, wobei die erste Bewegungsrichtung (11) von Kolben (8) und Übertragungselement (9) und die zweite Bewegungsrichtung (12) vom Ventilkörper (5) winklig zueinander angeordnet sind.

2. Dämpfungsvorrichtung nach Anspruch 1, **dadurch gekennzeichnet, dass** die Bahnkurve (10) derart gestaltet ist, dass die temperaturabhängig sich ändernde Viskosität der Dämpfungsflüssigkeit (1) kompensiert wird.

3. Dämpfungsvorrichtung nach einem der Ansprüche 1 oder 2, **dadurch gekennzeichnet, dass** die Bahnkurve (10) degressiv gekrümmt ausgebildet ist, derart, dass bei gleicher Temperaturänderung die Änderung des Durchströmquerschnitts des Dämpfungsspalts (2) bei tiefen Temperaturen größer als bei hohen Temperaturen ist.

4. Dämpfungsvorrichtung nach einem der Ansprüche 1 bis 3, **dadurch gekennzeichnet, dass** der Ventilkörper (5) Führungsstifte (13, 14) aufweist, die von der Bahnkurve (10) stets anliegend berührt sind.

5. Dämpfungsvorrichtung, umfassend einen von einer Dämpfungsflüssigkeit (1) durchströmbaren Dämpfungsspalt (2), der zwei miteinander in Verbindung stehende und mit der Dämpfungsflüssigkeit (1) befüllbare Fluidkammern (3, 4) miteinander verbindet, wobei der Durchströmquerschnitt des Dämpfungsspalts (2) durch einen Ventilkörper (5) veränderbar ist und wobei der Ventilkörper (5) von einem thermisch betätigbaren Stellelement (6) bewegbar ist, **dadurch gekennzeichnet, dass** das Stellelement (6) einen bogenförmig beweglichen und innerhalb einer entsprechenden torusförmigen Ausnehmung (15) angeordneten Kolben (8) und ein Übertragungselement (9) umfasst, wobei der Kolben (8) von einem sein Volumen temperaturabhängig ändernden Medium oder Dehnkörper (7) im Stellelement (6) beaufschlagbar ist, wobei das Übertragungselement (9) eine Führungsschräge (22) aufweist und wobei die erste Bewegungsrichtung (11) von Kolben (8) und Übertragungselement (9) und die zweite Bewegungsrichtung (12) vom Ventilkörper (5) winklig zueinander angeordnet sind.

6. Dämpfungsvorrichtung nach einen der Ansprüche 1 bis 5, **dadurch gekennzeichnet, dass** die beiden Bewegungsrichtungen (11, 12) im wesentlichen senkrecht zueinander angeordnet sind.

7. Dämpfungsvorrichtung nach einem der Ansprüche 1 bis 6, **dadurch gekennzeichnet, dass** das Verhältnis aus Verstellweg (17) des Übertragungselements (9) in erster Bewegungsrichtung (11) zum Hub (18) des Ventilkörpers (5) in zweiter Bewegungsrichtung (12) bei einer Temperaturdifferenz Δt von 120°C 1,5 bis 6 beträgt.

8. Dämpfungsvorrichtung nach einem der Ansprüche 1 bis 7, **dadurch gekennzeichnet, dass** der Kolben (8) innerhalb des Stellelements 6 gegenüber dem Übertragungselement (9) durch ein Dichtelement (19) abgedichtet ist.

9. Dämpfungsvorrichtung nach einem der Ansprüche 1 bis 8, **dadurch gekennzeichnet, dass** hinsichtlich konstanter Gebrauchseigenschaften bei unterschiedlichen Temperaturen die temperaturbedingte Ausdehnung des Mediums oder des Dehnkörpers (7) im Stellelement (6) an die temperaturbedingte Änderung der Viskosität der Dämpfungsflüssigkeit (1) angepasst ist.

10. Drehelastische Kupplung **gekennzeichnet durch** eine Dämpfungsvorrichtung nach einem der Ansprüche 1 bis 9.

## Claims

1. Damping device, comprising a damping gap (2) through which a damping liquid (1) can flow and which connects to one another two fluid chambers (3, 4) which are connected to one another and which can be filled with the damping liquid (1), wherein the throughflow cross section of the damping gap (2) can be varied by a valve body (5), and wherein the valve body (5) can be moved by a thermally actuable actuating element (6), **characterized in that** the actuating element (6) comprises a movable piston (8) and a transmission element (9), wherein the piston (8) can be acted on by a medium or expansion body (7) which changes its volume in a temperature-dependent fashion, wherein the transmission element (9) is formed by at least one cam (10) which can be moved back and forth in the movement direction (11) of the piston (8) by the piston (8), wherein the first movement direction (11) of the piston (8) and transmission element (9) and the second movement direction (12) of the valve body (5) are arranged at an angle to one another.

2. Damping device according to Claim 1, **characterized in that** the cam (10) is designed such that the viscosity of the damping liquid (1), which varies in a temperature-dependent fashion, is compensated.

3. Damping device according to either of Claims 1 and 2, **characterized in that** the cam (10) is formed with a degressive curvature, such that, for an equal temperature change, the change in the throughflow cross section of the damping gap (2) is greater at low temperatures than at high temperatures.

4. Damping device according to one of Claims 1 to 3, **characterized in that** the valve body (5) has guide pins (13, 14) which are abutted against by the cam (10) at all times.

5. Damping device, comprising a damping gap (2) through which a damping liquid (1) can flow and which connects to one another two fluid chambers (3, 4) which are connected to one another and which can be filled with the damping liquid (1), wherein the throughflow cross section of the damping gap (2) can be varied by a valve body (5), and wherein the valve body (5) can be moved by a thermally actuable actuating element (6), **characterized in that** the actuating element (6) comprises a piston (8), which can move on an arcuate path and which is arranged within a correspondingly toroidal recess (15), and a transmission element (9), wherein the piston (8) can be acted on by a medium or expansion body (7), which changes its volume in a temperature-dependent fashion, in the actuating element (6), wherein the transmission element (9) has a guide bevel (22), and wherein the first movement direction (11) of the piston (8) and transmission element (9) and the second movement direction (12) of the valve body (5) are arranged at an angle to one another.

6. Damping device according to one of Claims 1 to 5, **characterized in that** the two movement directions (11, 12) are arranged substantially perpendicular to one another.

7. Damping device according to one of Claims 1 to 6, **characterized in that** the ratio of adjustment travel (17) of the transmission element (9) in a first movement direction (11) to the stroke (18) of the valve body (5) in a second movement direction (12) in the case of a temperature difference At of 120°C is 1.5 to 6.

8. Damping device according to one of Claims 1 to 7, **characterized in that** the piston (8) within the actuating element (6) is sealed off with respect to the transmission element (9) by a sealing element (19).

9. Damping device according to one of Claims 1 to 8, **characterized in that**, with regard to constant usage characteristics at different temperatures, the temperature-induced expansion of the medium or of the expansion body (7) in the actuating element (6) is adapted to the temperature-induced change in the viscosity of the damping liquid (1).

10. Rotationally elastic coupling, **characterized by** a damping device according to one of Claims 1 to 9.

## Revendications

1. Dispositif d'amortissement, comprenant une fente d'amortissement (2) pouvant être parcourue par un liquide d'amortissement (1), qui relie l'une à l'autre deux chambres de fluide (3, 4) se trouvant en communication l'une avec l'autre et qui peuvent être remplies avec le liquide d'amortissement (1), dans lequel la section transversale de passage de la fente d'amortissement (2) peut être modifiée au moyen d'un corps de soupape (5) et dans lequel le corps de soupape (5) peut être déplacé par un organe de réglage (6) actionnable thermiquement, **caractérisé en ce que** l'organe de réglage (6) comprend un piston mobile (8) et un élément de transmission (9), dans lequel le piston (8) peut être actionné par un fluide ou par un corps de dilatation (7) changeant de volume en fonction de la température, dans lequel l'élément de transmission (9) est formé par au moins une came profilée (10), qui peut être déplacée en mouvement alternatif par le piston (8) dans la direction de déplacement (11) du piston (8), dans lequel la première direction de déplacement (11) du piston (8) et de l'élément de transmission (9) et la deuxième direction de déplacement (12) du corps de soupape (5) forment un angle entre elles.

2. Dispositif d'amortissement selon la revendication 1, **caractérisé en ce que** la came profilée (10) est configurée de telle manière que la viscosité changeant en fonction de la température du fluide d'amortissement (1) soit compensée.

3. Dispositif d'amortissement selon l'une quelconque des revendications 1 ou 2, **caractérisé en ce que** la came profilée (10) présente une courbure dégressive, de telle manière que, pour un même changement de température, la modification de la section transversale de passage de la fente d'amortissement (2) soit plus grande aux basses températures qu'aux hautes températures.

4. Dispositif d'amortissement selon l'une quelconque des revendications 1 à 3, **caractérisé en ce que** le corps de soupape (5) présente des tiges de guidage (13, 14), qui sont en permanence en contact avec la came profilée (10).

5. Dispositif d'amortissement, comprenant une fente d'amortissement (2) pouvant être parcourue par un liquide d'amortissement (1), qui relie l'une à l'autre deux chambres de fluide (3, 4) se trouvant en communication l'une avec l'autre et qui peuvent être remplies avec le liquide d'amortissement (1), dans lequel la section transversale de passage de la fente d'amortissement (2) peut être modifiée au moyen d'un corps de soupape (5) et dans lequel le corps de soupape (5) peut être déplacé par un organe de réglage (6) actionnable thermiquement, **caractérisé en ce que** l'organe de réglage (6) comprend un piston (8) arqué, mobile et disposé à l'intérieur d'un évidement en forme de tore correspondant (15), et un élément de transmission (9), dans lequel le piston (8) peut être actionné dans l'organe de réglage (6) par un fluide ou par un corps de dilatation (7) changeant de volume en fonction de la température, dans lequel l'élément de transmission (9) présente une rampe de guidage (22) et dans lequel la première direction de déplacement (11) du piston (8) et de l'élément de transmission (9) et la deuxième direction de déplacement (12) du corps de soupape (5) forment un angle entre elles.

6. Dispositif d'amortissement selon l'une quelconque des revendications 1 à 5, **caractérisé en ce que** les deux directions de déplacement (11, 12) sont disposées essentiellement perpendiculairement l'une à l'autre.

7. Dispositif d'amortissement selon l'une quelconque des revendications 1 à 6, **caractérisé en ce que** le rapport de la course de réglage (17) de l'élément de transmission (9) dans la première direction de déplacement (11) à la levée (18) du corps de soupape (5) dans la deuxième direction de déplacement (12) pour une différence de température Δt de 120°C vaut 1,5 à 6.

8. Dispositif d'amortissement selon l'une quelconque des revendications 1 à 7, **caractérisé en ce que** le piston (8) à l'intérieur de l'organe de réglage (6) est rendu étanche par rapport à l'élément de transmission (9) au moyen d'un élément d'étanchéité (19).

9. Dispositif d'amortissement selon l'une quelconque des revendications 1 à 8, **caractérisé en ce que**, en ce qui concerne les propriétés d'utilisation constantes à différentes températures, la dilatation en fonction de la température du fluide ou du corps de dilatation (7) dans l'organe de réglage (6) est adaptée à la modification en fonction de la température de la viscosité du liquide d'amortissement (1).

10. Embrayage élastique rotatif **caractérisé par** un dispositif d'amortissement selon l'une quelconque des revendications 1 à 9.
